# EUROPEAN PATENT APPLICATION

(11) **EP 2 207 082 A1**
(43) Date of publication of application: **14.07.2010**
(21) Application number: 08022543.6
(22) Date of filing: 31.12.2008
(51) Int. Cl.: G06F 3/048

(54) **Graphical user interface for mobile communication device**

(71) Applicant: Vodafone Holding GmbH, 40213 Düsseldorf (DE)
(72) Inventor: Schlosser, Katharina, 40219 Düsseldorf (DE)
(74) Representative: Jostarndt, Hans-Dieter

(57) **Abstract**

The invention relates to a method for organizing data items, wherein the method comprises the following steps:
- generating a graphical element for each data item;
- associating the graphical element to the corresponding data item;
- determining activation data;
- linking the activation data with the data item;
- displaying a first state of the graphical element (110; 111; 112; 113; 114; 115; 116; 117; 118; 120; 121; 122; 123; 124; 125; 126; 127; 128); or at least one part (110; 111; 112; 113; 114; 115; 116; 117; 118) of the graphical element (110; 111; 112; 113; 114; 115; 116; 117; 118; 120; 121; 122; 123; 124; 125; 126; 127; 128);
- evaluating if a selection of at least one selected graphical element (123) of a plurality of graphical elements (110; 111; 112; 113; 114; 115; 116; 117; 120; 121; 122; 123; 124; 125; 126; 127) has occurred;
- displaying a second state of the selected graphical element (123) or at least a part (113) of the selected graphical element (123);
- wherein the second state of the graphical element (123) or at least the part (113) of the selected graphical element (123) is displayed after the selection of the graphical element (123) has occurred.
- evaluating, if the selection of the graphical element (123) and/or of the part (113) of the selected graphical element (123) has been maintained during the display of the second state of the graphical element (123) and/or the part (113) of the graphical element (123);
- carrying out an action based the activation data related to the selected graphical element (123) in the case, that the evaluation yields, that the selection of the graphical element (110; 111; 112; 113; 114; 115; 116; 117; 118; 120; 121; 122; 123; 124; 125; 126; 127; 128) has been maintained during the display of the second state of the selected graphical element (123) and/or the part (113) of the selected graphical element (123) and
- displaying a third state of the selected graphical element (123) or at least the part (113) of the selected graphical element (123) in the case, that the evaluation yields, that the selection of the graphical element (123) has been maintained during the display of the second state of the selected graphical element (123) and/or the part (113) of the selected graphical element (123).

## Description

### Technical Field

The present invention is related to a mobile communication device with a graphical user interfaces. In particular, the present invention is related to a mobile communication device according to claim 1. The present invention is also related to a server and a system for replacing the graphical user interface of a mobile communication device.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

It is known to set up different kinds of directories in which the communication items are listed in a sequential order according to different sorting criteria such as the name of the sender, receiving time, sent time, subject, and the like. However, conventional sorting mechanisms still do not solve the issue completely and the presentation of a large number of communication items remains difficult to organize in this way. In general, it is very helpful for a user if he can link a specific information item within a certain context of other kinds of information.

Several attempts have been made to help the user to organize communication items in a more efficient way.

US 5898435 describes an image controlling device and a corresponding method. According to the known device a menu is constructed by arranging a plurality of menu items three dimensionally along a single cylinder. A portion of these menu items is displayed in such a manner that viewing is performed from the centre of the cylinder outwards. However, there remains a desire for the user for more support in organizing his communication items.

When today a mobile telephone is released on the market its graphical user interface i.e. the software part of the telephone user interface is a fixed component usually designed by a manufacturer and/or the network provider and programmed in the manufacturing environment of the mobile telephone. Every mobile telephone user interface is inevitably a compromise given the fact it needs to serve a huge audience with very different needs. This means menus are filled with applications which some users never use, the whole display is showing inappropriate elements and for specific information the user needs to open a browser to find this information. Dependant on how many submenus the user has to open this may be a very inefficient process in some cases.

Such menus may differ very greatly in terms of their structure, the number of parameters displayed and the difficulty of using them. The different desires, demands and capabilities of the users mean that there is generally not a single menu which meets the demands of all potential users. In practice, by way of example, a particular menu may be far too complicated and incomprehensible for a first, technically inexperienced user, yet may still be too simple for a second, technically experienced user, because the latter desires further refined setting options or would like to use further services offered.

Even for a single person the most frequently used functionalities may vary throughout a day and a week depending on the context of the daily life of the user. At work, usually calling numbers or caller lists as well as business e-mail functionalities are most important. At home, the same user may never access his business e-mail but rather use a camera and a photo gallery to show photos to visitors. At leisure times, for example on a festival the most important things to this user are latest updates about the festival and notifications when a favourite band starts playing. During holidays a personal blog may be the most frequently accessed service.

The graphical user interface of today's mobile telephones can only be adapted to a very little extent to fit to the personal context of the user let alone to a varying context. At most the user has the possibility in some cases to make some accommodations. E.g. he may configure some aspects of the graphical user interface such as the language and the date format. He may also change the look and feel of the graphical user interface by selecting a template or by "skinning" the mobile telephone, i.e. changing the appearance of elements shown on the display. In some cases, the user may also install additional applications on the telephone.

From US 2005/0289227 A1 a method for editing a new interface of a portable device by using a browser is known. According to the known method a new interface of the portable device is edited with texts and graphics provided on a website associated with a server. The user of the portable device connects to the internet and logs in to a website associated with a server. On the server he may edit text or graphs a window or a picture frame of a new user interface. After the editing is finished the user downloads the information associated with the new user interface into a specific folder of the portable electronic device to replace the original graphical user interface of the device. In this way a personal style of the user interface can be created.

### Brief description of the invention

The present invention proposes a concept for associating information items with activations to emphasise the context of each communication item. It is an advantage of the present invention to provide additional contextual information to each information item. Providing contextual information is a very efficient way to support the memory of the user helping him to find and organise information items.

According to a first aspect the invention suggests a method for organizing data items, wherein the method comprises the following steps:
- generating a graphical element for each data item;
- associating the graphical element to the corresponding data item;
- determining activation data;
- linking the activation data with the data item;
- displaying a first state of the graphical element or at least one part of the graphical element;
- evaluating if a selection of at least one selected graphical element of a plurality of graphical elements has occurred;
- displaying a second state of the selected graphical element or at least a part of the selected graphical element;
- wherein the second state of the graphical element or at least the part of the selected graphical element is displayed after the selection of the graphical element has occurred.
- evaluating, if the selection of the graphical element and/or of the part of the selected graphical element has been maintained during the display of the second state of the graphical element and/or the part of the graphical element;
- carrying out an action based the activation data related to the selected graphical element in the case, that the evaluation yields, that the selection of the graphical element has been maintained during the display of the second state of the selected graphical element and/or the part of the selected graphical element and
- displaying a third state of the selected graphical element or at least the part of the selected graphical element in the case, that the evaluation yields, that the selection of the graphical element has been maintained during the display of the second state of the selected graphical element and/or the part of the selected graphical element.

The graphical element is preferably a definable area, for example an area of the display of the communication device. This area has a selectable extension, shape and/or structure. It is for example a button.

According to one embodiment of the invention, the graphical area comprises an icon.

According to another embodiment of the invention, the graphical area comprises and icon and a label.

According to a further embodiment of the invention, the icon is placed next to the label. According to a further embodiment of the mobile communication device the graphical element is an icon.

Linking the communication item activation_data is valuable contextual information for the user to support his memory when he tries to remember a situation or to find a specific data item.

According to one embodiment of the invention, the method further comprises a step of associating a communication item with the data item.

According to one embodiment the method further comprises the step of displaying a context menu in conjunction with the graphical elements. A context menu is an efficient way to communicate activation data to the user.

In a convenient development of the inventive method it further comprises the step of positioning the graphical element associated with the data item according to the activation data linked with the data item.

According to an embodiment of the invention, a previously selected action is not carried out in the case, that the evaluation yields, that the selection of the graphical element has not been maintained during the display of the second state of the selected graphical element and/or the part of the selected graphical element.

According to another aspect of the invention, the method is carried out in that, that in the case, that the evaluation deals, that the selection of the graphical element has been maintained during the display of the second state of the selected graphical element) and/or the part of the selected graphical element a previously selected graphical element is deselected.

According to a further embodiment of the invention the selection of the graphical element occurs through a flick action.

According to another aspect of the invention the selection of the graphical element occurs through panning.

According to a further aspect the invention suggests a mobile communication device comprising a radio interface, an input unit, a display, and a processing means, wherein the processing means is arranged to receive a communication item, to associate the communication item with a graphical element and to control the display such that a context menu displayed on the display. The processing means places the graphical element on the context menu to allow a user a selection of one or more graphical elements displayed within the context menu.

The invention further more relates to a mobile communication device with processing means, which are capable of carrying out methods and/or procedures described within the context of the current application.

Further features and advantages will become apparent when reading the detailed description appended with drawings.

### Short description of the drawings

In the drawing exemplary embodiments of the invention are illustrated. It shows:
- Figure 1: a top view of the mobile communication device according to the invention;
- Figure 2 Figures 3a to 3d: a schematic block diagram of the communication device; top views of the communication device in different steps of selecting graphical elements;
- Figures 4a to 4d: top views of the communication device in different steps of selecting graphical elements;
- Figures 5a to 5d: top views of the communication device in different steps of selecting graphical elements; and
- Figures 6a to 6d: top views of the communication device in different steps of selecting graphical elements.

Similar or identical features and elements are labeled with the same reference numbers in the drawings.

### Detailed description

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

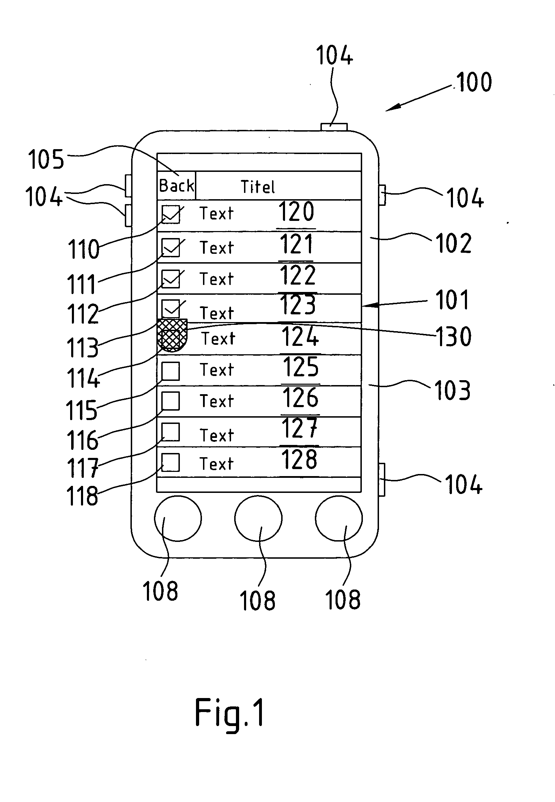

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below. Figure 1 shows a mobile communication device 100 according to the present invention. For example the mobile communication device is a mobile phone, a PDA (personal digital assistant) or the like, which is connected to a wireless public land mobile network (PLMN). The PLMN is a wireless telecommunication network according to GSM standard or according to the UMTS standard for example. The user of the communication device 100 can set up a connection to other communication devices through the network.

For the sake of the simplicity the present invention will be described in the following with reference to a PDA having a relatively large screen 101 covering a major part of the top surface 102 of the housing 103 of the mobile communication device. However, the present invention shall not be limited to PDAs.

On the periphery of the housing 103 there are buttons 104 provided enabling a user to control functionalities of the communication device 100. In addition to that, there are soft keys forming a command bar 105 and a scroll bar 106 available for the user for further control functionalities. In its main portion the screen 101 displays a selection menu, wherein the selection menu contains a plurality of graphical elements 120; 121; 122; 123; 124; 125; 126; 127; 128. The graphical elements 120; 121; 122; 123; 124; 125; 126; 127; 128 comprise at least one part 110, 111, 112, 113, 114, 115, 116, 117, 118, which is capable of indicating a selection of the graphical element 120, 121, 122; 123; 124; 125; 126; 127; 128. The part 110, 111, 112, 113, 114, 115, 116, 117, 118 is for example an icon.

Finally, there are three hard keys 108 provided in the lower part of the top surface 102 of the housing 103.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

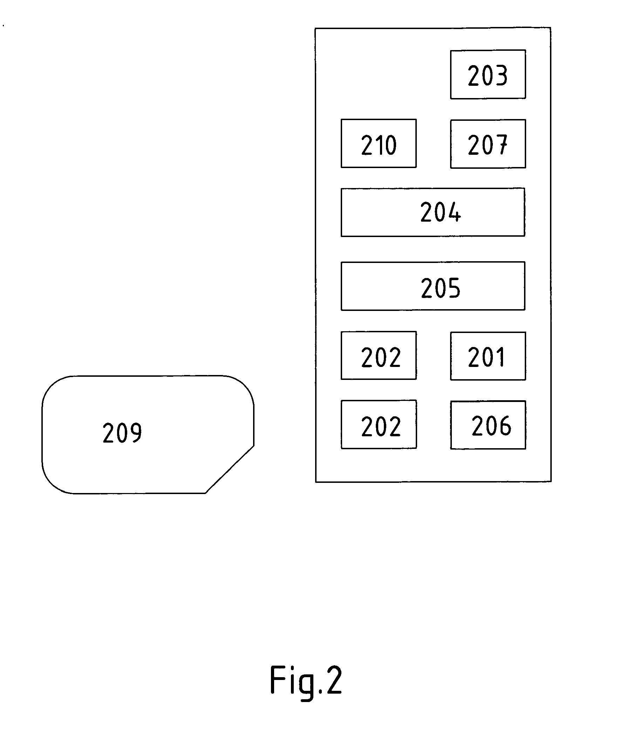

Figure 2 shows a schematic block diagram of the mobile communication device 100. The mobile communication device 100 comprises a mobile terminal 200 including a main processor 201 for controlling the operation of the mobile terminal 200. A memory 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the PLMN mentioned above.

For capturing acoustic signals, particularly for capturing speech from the user of the mobile terminal 200, the mobile terminal 200 comprises a microphone 206. For outputting acoustic signals, the mobile terminal 200 comprises a loudspeaker 207. Moreover, the mobile terminal 200 comprises the screen 101, e.g. a liquid crystal display (LCD) 204. An input unit 205 interfaces the buttons 104, the command bar 105 and the hard keys 108.

By means of a card reader unit 208, the mobile terminal 200 can be connected to a subscriber identity module (SIM card) 209 to form the mobile communication device 100. The subscriber identity module 209 is a so-called smart card, which can be inserted into a card receptacle of the mobile terminal 200 that holds the card in a position, in which its contact elements are connected to corresponding contact elements of the card reader unit 208 of the mobile terminal 200. The card receptacle and the card reader unit 208 are usually arranged within a battery compartment of the mobile terminal 200, which is accessible by the mobile user.

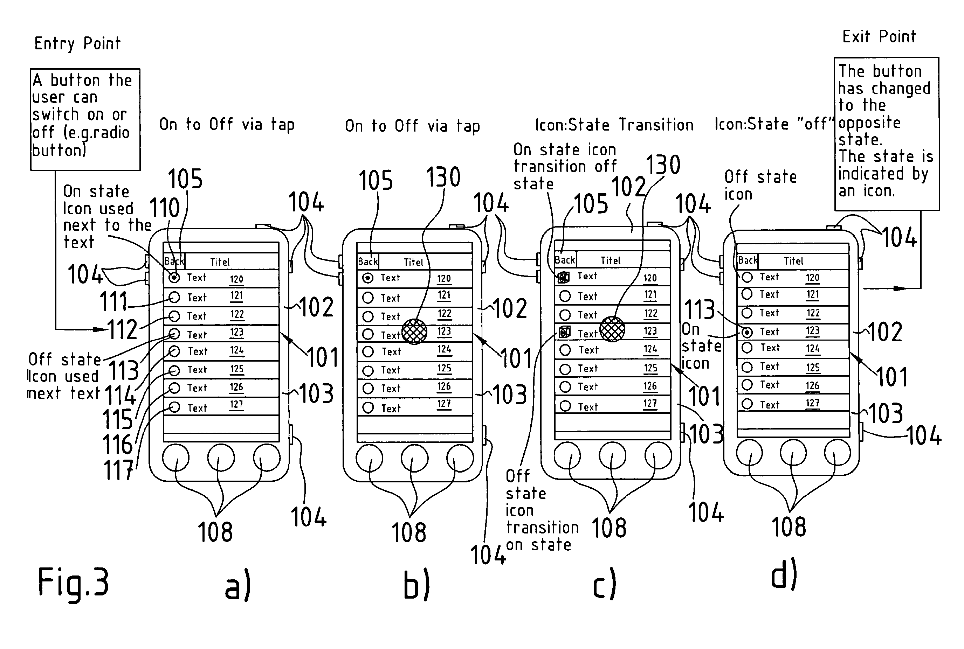

The subscriber identity module 209 may be configured as a subscriber identity module (SIM) according to the GSM standard or as a universal subscriber identity module (USIM) according to the UMTS standard, for example. Finally, the mobile terminal 200 is equipped with a GPS module 210 allowing to determine the location of the mobile terminal 200. In the memory 202 maps are stored such that the communication device 100 can indicate the present location_of the device of the screen 101. The functionality of the GPS module 210 provides the opportunity to support the user with additional contextual information related to the received communication items as will be described in the following in connection with figures 3a to 3d showing different kinds of views or representations of the communication items 107 on the screen 101. The main processor 210 allows to display a plurality of a graphical elements in a context menu on the display 204.

### Fig. 3

Fig. 3 consists of three parts, fig. 3a, 3b, 3c and 3d, which show a sequence of different states of a graphical user interface, especially a graphical user interface of a mobile user equipment as for example a mobile cellular phone.

The graphical user interface has a functionality, as it has been described in the other parts of this application, especially in the detailed description, for example with reference to figure 1.

The communication device shown in figures 3a, 3c and 3d contain a housing 103. On the periphery of the housing 103 there are buttons 104 provided enabling a user to control functionalities of the communication device 100. In addition to that, there are softkeys forming a command bar 105 and a scrollbar 106 available for the user for further control functionalities. In its main portion the screen 101 displays a selection menu, wherein the selection menu contains a plurality of graphical elements 120; 121; 122; 123; 124; 125; 126; 127. The graphical elements 120; 121; 122; 123; 124; 125; 126; 127 comprise at least one part 110, 111, 112, 113, 114, 115, 116, 117, which is capable of indicating a selection of the graphical element 120, 121, 122; 123; 124; 125; 126; 127. The part 110, 111, 112, 113, 114, 115, 116, 117 is for example an icon.

The sequence of different states of the graphical elements is described afterwards.

The sequence starts with an entry point, wherein a button 120; 121; 122; 123; 124; 125; 126; 127; 128 can be switched on or off. The button 120; 121; 122; 123; 124; 125; 126; 127; 128 comprises an icon 110, 111, 112, 113, 114, 115, 116, 117, 118 and a label, wherein the icon 110, 111, 112, 113, 114, 115, 116, 117, 118 is placed next to the label. The state of the button (switched on or switched off) is indicated by the icon.

### Fig. 3a

Fig. 3a shows the start of the sequence, wherein a first icon 110 is switched on. The other icons 111; 112; 113; 114; 115; 116; 117 are switched off. The switched on state of the icon 110 is displayed in a manner which is different from the other icons, 112, 113, 114, 115, 116 and 117.

According to an embodiment of the invention the menu is designed in a way, wherein at least one option for an action to be carried out with regard of the activation data is set in an "on" state by default.

Respectively, a button may be set in the "on" state by default.

### Fig. 3b

Fig. 3b shows the same activation status of the icons 110, 111, 112, 113, 114, 115, 116 and 117 as displayed beforehand in figure 3a.

A user touches the graphical element 123. The area, where the touch of the user occurs is afterwards called a marked area 130. It is for example a tap.

An operating system of the mobile user equipment evaluates the existence of the touch of the user and relates the marked area 130 with at least one graphical element 123.

An operating system of the mobile user equipment detects the touch and relates it to at least one corresponding graphical element 123.

To inform the user about a detection of the selection of the at least one graphical element 123, the operating system initiates a response, which informs the user about the detection of the selection.

The operating system, especially the operating system of the mobile user equipment initiates a system response.

The system response is for example a visual feedback or an haptic feedback. In the case of an haptic feedback the user feels for example a turn of a cube representing an area 113 of the graphical element 123.

The corresponding screen description / reference: this button is on (active). The system evaluates, if an user interaction occurs. In the case, that the user taps the graphical element 123 or at least a part 113 of the graphical element, the system generates a response, for e.g. a visual feedback: animated status change between on and off clockwise. Haptic feedback: the user feels e.g. cube turn and the edge of the cube turn over auditory feedback: tbd.

### Fig. 3c

An example of a visual feedback is shown in fig. 3c. Fig. 3c shows a rotation of the icon 113. This rotation may occur in different ways. It is for example possible, that the selected area 113 (icon) of the graphical element 123 has at least 3 states; wherein a first state before the selection is displayed in figure 3a, wherein a second state of the graphical element is shown in figure 3c and wherein a third state of the graphical element 113 is displayed in figure 3d.

It is within the scope of the invention, to integrate even more states of the graphical elements, e.g. the graphical 113. It is for example possible that the graphical elements, 123 and/or the part 113 of the graphical element change continuously or within certain steps, for example clock wise.

It is within the scope of the invention to integrate means for informing the user about the selection and a possibility to maintain the selection and by this initiate an action related to activation data corresponding to the selected graphical element 123.

The operating system of the mobile user equipment evaluates, if the selection of the graphical element 123 has been maintained after the display of the second state of the graphical element 123 and/or the part 113 of the graphical element 123.

In the case, that the selection is not maintained during the display of the second state and a certain time, especially a usual reaction time of users to signalling events is maintained, the operating system of the user equipment 110 deselects the graphical element 123.

In the case that the selection is not maintained, an action based on the activation data relating to the graphical element 123 is not carried out.

Additionally it is possible that in this case a previous selection, for example of another graphical element, for example the graphical element 120 is maintained.

In the case, that the user does not maintain the selection of the graphical element 123 it is alternatively and/or furthermore within the scope of the invention, that the communication device returns to the state beforehand described according to figure 3a; that means before the described starting process of the procedure.

In the case, that the selection of the graphical element 123 is maintained during the display of the second state of the graphical element 123 and/or the part 113 of the graphical element 123 an action based on the activation data related to the selected graphical element 123 is carried out.

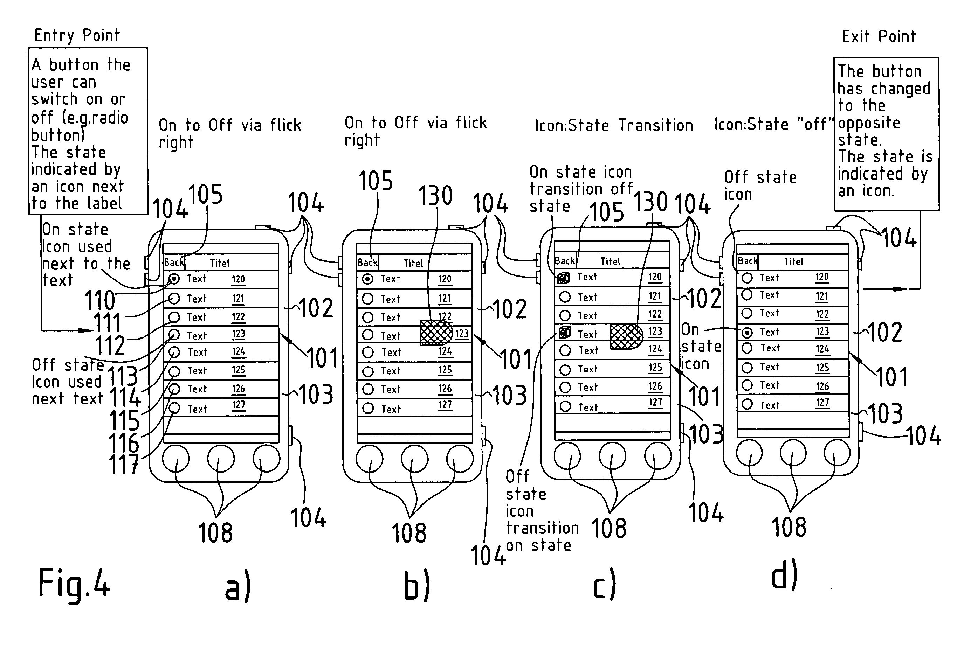

The corresponding graphical illustration including the selection of the graphical element 123 is shown in figure 4d.

As described according to the figures 3a, 3b, 3c and 3d, as state transition of at least one icon 113 has occurred. The state of the icon 113 has changed from deselected to selected and thus activated.

Correspondingly a state of another icon 110 has changed from selected to deselected.

To the selection of the graphical element 123 and/or the activation corresponding to the graphical element 123, a system response maybe initiated.

Examples for the system response are a visual feedback, as for e.g. the predescribed change of the state of the icon 113 and/or additional features, as for e.g. an animated status.

For those skills in the art, it is possible to implement a different animated status changes, for e.g. clockwise status change between on and off.

According to one embodiment of the invention, items (icons) 110 and 113 have a transition animation with a rotation and/or a movement in directions different from each other.

Additionally it is possible to integrate an haptic feedback. In the case of an haptic feedback, the user feels for e.g. a cube turn of the icon 113 and the edge of the cube turn over.

Additionally and/or alternatively an auditory feedback may be given.

As displayed in figure 4d an exit point of the sequence has been reached. The button corresponding to the graphical element 123 and comprising the icon 113 and text and/or a symbol for information purposes has changed to the opposite state.

### Fig. 4

Fig. 4 consists of three parts, fig. 4a, 4b, 4c and 4d, which show a sequence of different states of a graphical user interface, especially a graphical user interface of a mobile user equipment as for example a mobile cellular phone.

The graphical user interface has a functionality, as it has been described in the other parts of this application, especially in the detailed description, for example with reference to figure 1.

The communication device shown in figures 4a, 4c and 4d contain a housing 103. On the periphery of the housing 103 there are buttons 104 provided enabling a user to control functionalities of the communication device 100. In addition to that, there are softkeys forming a command bar 105 and a scrollbar 106 available for the user for further control functionalities. In its main portion the screen 101 displays a selection menu, wherein the selection menu contains a plurality of graphical elements 120; 121; 122; 123; 124; 125; 126; 127. The graphical elements 120; 121; 122; 123; 124; 125; 126; 127 comprise at least one part 110, 111, 112, 113, 114, 115, 116, 117, which is capable of indicating a selection of the graphical element 120, 121, 122; 123; 124; 125; 126; 127. The part 110, 111, 112, 113, 114, 115, 116, 117 is for example an icon.

The sequence of different states of the graphical elements is described afterwards.

The sequence starts with an entry point, wherein a button 120; 121; 122; 123; 124; 125; 126; 127; 128 can be switched on or off. The button 120; 121; 122; 123; 124; 125; 126; 127; 128 comprises an icon 110, 111, 112, 113, 114, 115, 116, 117, 118 and a label, wherein the icon 110, 111, 112, 113, 114, 115, 116, 117, 118 is placed next to the label. The state of the button (switched on or switched off) is indicated by the icon.

### Fig. 4a

Fig. 4a shows the start of the sequence, wherein a first icon 110 is switched on. The other icons 111; 112; 113; 114; 115; 116; 117 are switched off. The switched on state of the icon 110 is displayed in a manner which is different from the other icons, 112, 113, 114, 115, 116 and 117.

Further elements and/or activities displayed in figure 4a correspond to the predescribed figure 3a.

Also the other parts for b, c and for d correspond to the predescribed figures 3b, 3c and 3d, wherein it is obvious, that the corresponding elements can be combined.

According to an embodiment of the invention the menu is designed in a way, wherein at least one option for an action to be carried out with regard of the activation data is set in an "on" state by default.

Respectively, a button may be set in the "on" state by default.

### Fig. 4b

Fig. 4b shows the same activation status of the icons 110, 111, 112, 113, 114, 115, 116 and 117 as displayed beforehand in figure 4a.

A user touches the graphical element 123. The area, where the touch of the user occurs is afterwards called a marked area 130. It is for example a tap.

An operating system of the mobile user equipment evaluates the existence of the touch of the user and relates the marked area 130 with at least one graphical element 123.

An operating system of the mobile user equipment detects the touch and relates it to at least one corresponding graphical element 123.

To inform the user about a detection of the selection of the at least one graphical element 123, the operating system initiates a response, which informs the user about the detection of the selection.

The operating system, especially the operating system of the mobile user equipment initiates a system response.

The system response is for example a visual feedback or an haptic feedback. In the case of an haptic feedback the user feels for example a turn of a cube representing an area 113 of the graphical element 123.

Screen description / reference: this button is on (active).
User interaction: user taps the icon or label.
System reponse: visual feedback: animated status change between on and off clockwise. Haptic feedback: the user feels e.g. cube turn and the edge of the cube turn over auditory feedback: tbd.

### Fig. 4c

An example of a visual feedback is shown in fig. 4c. Fig. 4c shows a rotation of the icon 113. This rotation may occur in different ways. It is for example possible, that the selected area 113 (icon) of the graphical element 123 has at least 3 states; wherein a first state before the selection is displayed in figure 4a, wherein a second state of the graphical element is shown in figure 4c and wherein a third state of the graphical element 113 is displayed in figure 4d.

It is within the scope of the invention, to integrate even more states of the graphical elements, e.g. the graphical 113. It is for example possible that the graphical elements, 123 and/or the part 113 of the graphical element change continuously or within certain steps, for example clock wise.

It is within the scope of the invention to integrate means for informing the user about the selection and a possibility to maintain the selection and by this initiate an action related to activation data corresponding to the selected graphical element 123.

The operating system of the mobile user equipment evaluates, if the selection of the graphical element 123 has been maintained after the display of the second state of the graphical element 123 and/or the part 113 of the graphical element 123.

In the case, that the selection of the graphical element 123 is not maintained during the display of the second state of the graphical element 123 and/or the part 113 of the graphical element 123 and a certain time, especially a usual reaction time of users to signalling has passed, a graphical element 123 is deselected.

In the case that the selection is not maintained, the activation based on the activation data which relate to the graphical element 123 is not carried out.

Additionally it is possible that in this case a previous selection, for example of another graphical element, for example the graphical element 120 is maintained.

In the case, that the user does not maintain the selection of the graphical element 123 it is alternatively and/or furthermore within the scope of the invention, that the communication device returns to the state described beforehand according to figure 4a; that means before the described starting process of the procedure.

Figure 4d shows a state, wherein the selection of the graphical element 123 and/or the part 113 of the selected graphical element has been maintained during the display of the second state of the graphical element and/or the part 113 of the graphical element.

In this case an action based the activation data related to the selected graphical element 123 is carried out.

On to off via flick right.
Screen description / reference: the button is on (active).
User interaction: user flicks the icon or label right or left.
System reponse: visual feedback: animated status change between on and off clockwise. Haptic feedback: the user feels e.g. cube turn and the edge of the cube turn over. Auditory feedback: tbd.
Notes: same use can be applied for flicking from left to left with an animation going vice versa.

As previously described, the activations, graphical displays and system responses relating to figures 4a, 4b, 4c and 4d correspond to the figures 3a, 3b, 3c and 3d.

Figures 4b and 4c describe a further selection mechanism within the scope of the invention.

The selection mechanism described according to figures 4b and 4c a flick right action. In this case, a selection of the graphical element 123 is regarded as occurring, if a certain movement of a pointer, for e.g. a finger, a mouse or a pen occurs.

An example of such a flick action is dragging a slider, wherein the slider corresponds to the marked area 130.

Figures 4b to 4c show a flick right action, wherein the movement occurs from left to right. However, it is possible to integrate other movement directions, for e.g. from right to left or in vertical direction.

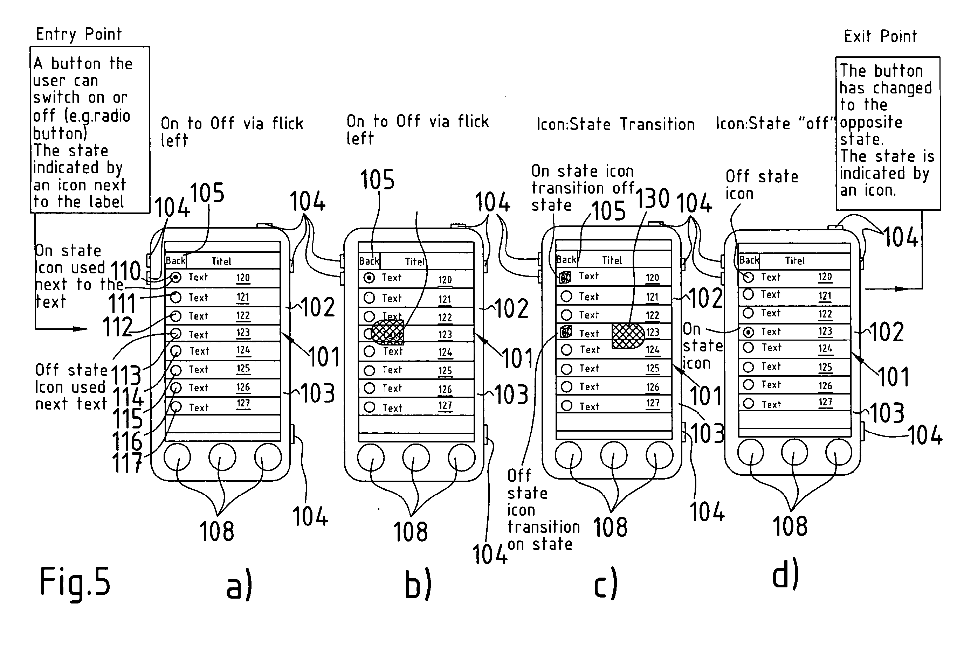

Moreover, it is possible to integrate a combination of different movements, as it is described according to figure 5, wherein a movement of the marked area 130 as flick left action combined with an afterwards occurring flick right action (figure 5c) is necessary to carry out an action based on activation data relating to the graphical element 123.

Corresponding to the details from fig. 5 reference to figures 3 and 4 is made.

Afterwards some key elements relating to figure 5 are described:

### Fig. 5

Entry point: a button to the user can switch on or off (e.g. radio button). The state is indicated by an icon next to the label.

### Fig. 5a

On to off via flick left.

On state icon used next to the text.

Off state icon used next to the text.

Screen description / reference : one option is set in the "on" state by default.

### Fig. 5b

On to off via flick left.

Screen description / reference: the button is on (active).

User interaction: user flicks the icon or label left.

System reponse: visual feedback: animated status change between on and off clockwise. Haptic feedback: the user feels e.g. cube turn and the edge of the cube turn over. Auditory feedback: may be additionally and/or alternatively implemented.

Notes: same use can be applied for flicking from right to left with an animation going vice versa.

### Fig. 5c

Icon: status transition.

On state icon transition to off state.

Off state icon transition to on state.

System reponse: visual feedback: animated status change between on and off clockwise. Both items have transition animation in different directions. Haptic feedback: the user feels e.g. cube turn and the edge of the cube turn over. Auditory feedback: is integrated additionally and/or alternatively.

Notes: same use can be applied for flicking from right to left with an animation going vice versa.

### Fig. 5d

Icon: state "off'.

Exit point: the button has changed to the opposite state. The state is indicated by an icon.

Off state icon.

On state icon.

Screen description / reference: another button is on (active).

System reponse: the radio button is turned to selected state.

### Fig. 6

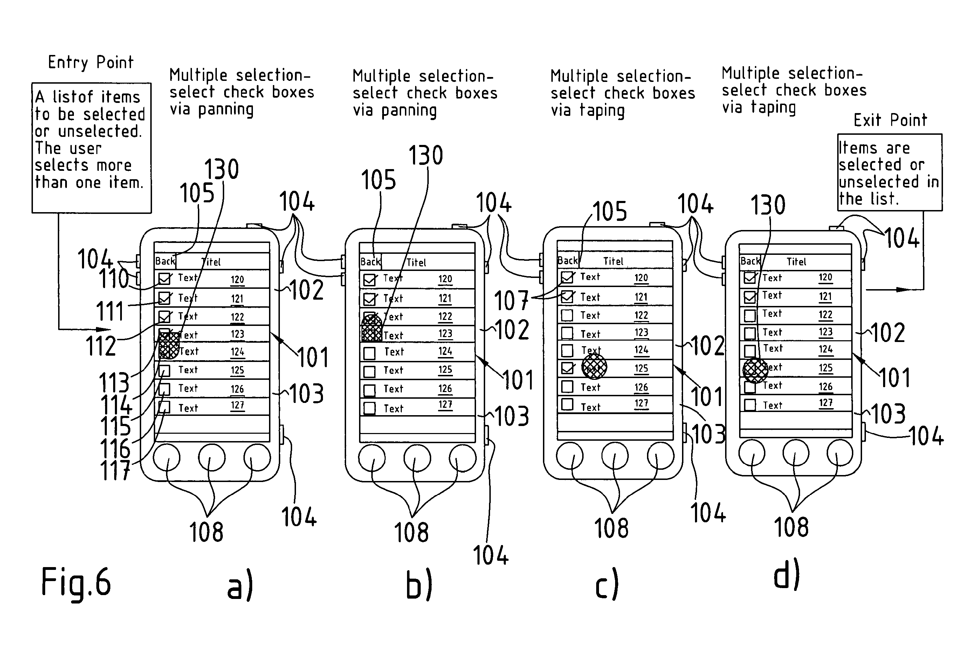

Fig. 6 shows embodiments a multiple selection solution.

the multiple selection described according to figures 6a, 6b, 6c and 6d allows to select a plurality of actions to be carried out.

Entry point: a list of items to be selected or unselected. The user selects more than one item.

### Fig. 6a

Multiple selection - select check boxes via panning.

Screen description: a list of items which can be selected by check boxes is displayed on the screen.

User interaction: the user pans down or up the unselected check boxes to select every item.

System reponse: items are selected. A flick appears in every selected check box. Notes: the user can only select the check boxes via panning over the check box icon.

### Fig. 6b

Multiple selection - unselected check boxes via panning.

Screen description: the list shows all the selected items.

User interaction: the user pans up or down the selected check boxes the unselect items.

System reponse: items turns to unselected. A tick appears in every selected check box. Or the selected ones get unselected again.

Notes: the user can only select the check boxes via panning over the check box icon.

### Fig. 6a

Multiple selection - selected check boxes via taping.

Screen description: the list shows all the selected items.

User interaction: user taps in the list to select an unselected check box.

System response: item is selected. A tick appears in every selected check box. Notes: the user can select the check boxes via taping over the check box icon or via taping on the entire line.

### Fig. 6d

Multiple selection - unselected check boxes via taping.

Exit point: items are selected or unselected in the first.

Screen description: the list shows all the selected items.

User interaction: user taps on the check box icon to unselect the selected item.

System reponse: items is unselected. A tick appears in every selected check box.

Or the selected ones get unselected again.

Notes: the user can select the check boxes via taping over the check box icon or via taping on the entire line.

The present invention enables a user to organize data items and to select activities in a time and resource efficient manner.

Since the user makes a selection, features are implemented to inform him about the selection and to ensure, that an activation is carried out in the case, that the selection is maintained.

The invention thus implements a high security against undesired, incidentally occurring activations in combinations with a quick selection and activation of desired actions.

### List of reference numerals

- 100: communication device
- 101: screen
- 102: top surface
- 103: housing
- 104: buttons
- 105: command bar
- 108: hard key
- 110: part of a graphical element
- 111: part of a graphical element
- 112: part of a graphical element
- 113: part of a graphical element
- 114: part of a graphical element
- 115: part of a graphical element
- 116: part of a graphical element
- 117: part of a graphical element
- 118: part of a graphical element
- 120: graphical element
- 121: graphical element
- 122: graphical element
- 123: graphical element
- 124: graphical element
- 125: graphical element
- 126: graphical element
- 127: graphical element
- 128: graphical element
- 130: marked area
- 201: main processor
- 202: memory
- 203: radio interface
- 204: LCD display
- 205: input unit
- 206: microphone
- 207: loud speaker
- 208: card reader
- 209: SIM card
- 210: GPS module

## Claims

1. Method for organizing data items, wherein the method comprises the following steps:
- generating a graphical element for each data item;
- associating the graphical element to the corresponding data item;
- determining activation data;
- linking the activation data with the data item;
- displaying a first state of the graphical element (110; 111; 112; 113; 114; 115; 116; 117; 118; 120; 121; 122; 123; 124; 125; 126; 127; 128); or at least one part (110; 111; 112; 113; 114; 115; 116; 117; 118) of the graphical element (110; 111; 112; 113; 114; 115; 116; 117; 118; 120; 121; 122; 123; 124; 125; 126; 127; 128);
- evaluating if a selection of at least one selected graphical element (123) of a plurality of graphical elements (110; 111; 112; 113; 114; 115; 116; 117; 120; 121; 122; 123; 124; 125; 126; 127) has occurred;
- displaying a second state of the selected graphical element (123) or at least a part (113) of the selected graphical element (123);
- wherein the second state of the graphical element (123) or at least the part (113) of the selected graphical element (123) is displayed after the selection of the graphical element (123) has occurred.
- evaluating, if the selection of the graphical element (123) and/or of the part (113) of the selected graphical element (123) has been maintained during the display of the second state of the graphical element (123) and/or the part (113) of the graphical element (123);
- carrying out an action based on the activation data related to the selected graphical element (123) in the case, that the evaluation yields, that the selection of the graphical element (123) has been maintained during the display of the second state of the selected graphical element (123) and/or the part (113) of the selected graphical element (123) and
- displaying a third state of the selected graphical element (123) or at least the part (113) of the selected graphical element (123) in the case, that the evaluation yields, that the selection of the graphical element (110; 111; 112; 113; 114; 115; 116; 117; 118; 120; 121; 122; 123; 124; 125; 126; 127; 128) has been maintained during the display of the second state of the selected graphical element (123) and/or the part (113) of the selected graphical element (123).

2. The method according to claim 1, **characterized in that** the action is not carried out in the case, that the evaluation yields, that the selection of the graphical element (123) has not been maintained during the display of the second state of the selected graphical element (123) and/or the part (113) of the selected graphical element (123).

3. The method according to claim 1, **characterized in that**, that in the case, that the evaluation yields, that the selection of the graphical element (123) has been maintained during the display of the second state of the selected graphical element (123) and/or the part (113) of the selected graphical element (123) a previously selected graphical element (110; 120) is deselected.

4. The method according to any of the preceding claims, **characterized in that,** the selection of the graphical element (123) occurs through a flick action.

5. The method according to any of the claims 1 to 3, **characterized in that**, the selection of the graphical element (123) occurs through panning.

6. Mobile communication device comprising a radio interface (203), an input unit (205), a display (101, 204), and a processing means (201) wherein the processing means is arranged to control the display (101, 204) such that a context menu is displayed on the display (101, 204), and wherein the processing means (201) places the graphical element (307) on the context menu contains a plurality of graphical elements (110; 111; 112; 112; 114; 115; 116; 117; 118; 120; 121; 122; 123; 124; 125; 126; 127 and 128) and wherein the processing means (201) is capable of carrying out the method according to any of the preceding claims.
